Europäisches Patentamt

European Patent Office

Office européen des brevets

(11) Veröffentlichungsnummer: **0 517 026 A1**

# EUROPÄISCHE PATENTANMELDUNG

(21) Anmeldenummer: **92108394.5**

(22) Anmeldetag: **19.05.92**

(51) Int. Cl.⁵: **B32B 27/08**

(30) Priorität: **01.06.91 DE 4118048**

(43) Veröffentlichungstag der Anmeldung:
**09.12.92 Patentblatt 92/50**

(84) Benannte Vertragsstaaten:
**AT BE CH DE DK FR GB IT LI NL SE**

(71) Anmelder: **Wolff Walsrode Aktiengesellschaft
Postfach
W-3030 Walsrode 1(DE)**

(72) Erfinder: **Preiss, Holger, Dipl.-Ing.
Kettenburg 29
W-2722 Visselhövede(DE)**
Erfinder: **Bochow, Richarda, Dipl.-Ing.
Tietlinger Lönsweg 55
W-3032 Fallingbostel(DE)**
Erfinder: **Lund, Klaus, Dr.
Kirchboitzen 146
W-3030 Walsrode 14(DE)**

(74) Vertreter: **Braun, Rolf, Dr. et al
c/o Bayer AG Konzernverwaltung RP Patente
Konzern
W-5090 Leverkusen 1 Bayerwerk(DE)**

(54) **Metallfreie Sperrschichtfolien.**

(57) Die Erfindung betrifft Verbundfolien mit einer besonders hohen Sperrwirkung gegenüber Gasen und Wasserdampf, ohne daß eine Metallschicht, z.B. aus Aluminium, oder eine chlorhaltige Lackierung enthalten sein muß.

EP 0 517 026 A1

Die Erfindung betrifft Verbundfolien mit einer besonders hohen Sperrwirkung gegenüber Gasen und Wasserdampf, ohne daß eine Metallschicht, z.B. aus Aluminium, oder eine chlorhaltige Lackierung enthalten sein muß.

Für die Verpackung von besonders empfindlichen Füllgütern, z.B..von Produkten, die durch Sauerstoff oxidativ verändert werden oder die durch Feuchtigkeitsaufnahme die Gebrauchsfähigkeit verlieren, ist es bekannt, diese Produkte unter Vakuum oder Schutzgas zu verpacken. Um das Vakuum bzw. das Schutzgas über längere Zeit in der Packung zu erhalten, muß die Umhüllung entsprechend gasdicht sein. Es ist bereits bekannt, als Umhüllung Verbundfolien zu verwenden, die eine Metallschicht, z.B. aus Aluminium, aufweisen. Metallhaltige Folien erlauben aber keine Sicht auf das Füllgut, sind empfindlich gegen Knickbruch und weisen infolge der Anwesenheit einer Metallschicht eine hohe Leitfähigkeit auf. Zudem sind sie gegebenenfalls korrosionsanfällig.

Es sind auch bereits metallschichtfreie Verbundfolien bekannt, die Sperrschichten aufweisen, siehe EP-A-0 062 815 und 0 208 075. Die bekannten metallschichtfreien Verbundfolien entsprechen in ihren Eigenschaften aber noch nicht in allen Eigenschaften den metallschichthaltigen Verbundfolien, insbesondere in bezug auf die zeitabhängige Konstanz der Sperrwirkung.

Der Erfindung liegt die Aufgabe zugrunde eine verbesserte Verbundfolie bereitzustellen, die in ihren Eigenschaften einer metallschichthaltigen Verbundfolie entspricht ohne aber deren Nachteile aufzuweisen.

Gegenstand der Erfindung ist eine metallschichtfreie, sperrschichthaltige Mehrschichtfolie mit verbessertem Sperrverhalten gegen Gas und Wasserdampf, dadurch gekennzeichnet, daß sie im wesentlichen folgende Schichten aufweist:

A) eine gegebenenfalls gereckte Polyesterschicht, oder gereckte Polyesterschicht, tiefziehfähig,

B1) gegebenenfalls eine Verbindungs- oder Klebeschicht,

C1) eine Polyolefinschicht

D1) eine gegebenenfalls mit oder ohne Schutzlack versehene Polyvinylalkoholschicht,

B3) gegebenenfalls eine Verbindungs- oder Klebeschicht,

C2) eine Polyolefinschicht,

B4) gegebenenfalls eine Verbindungs- oder Klebeschicht,

D2) gegebenenfalls mit oder ohne Schutzlack versehene Polyvinylalkoholschicht,

B5) gegebenenfalls eine Verbindungs- oder Klebeschicht,

C3) eine Polyolefinschicht.

Die Polyvinylalkoholschicht D) besteht vorzugsweise aus einem Ethylen/Vinylacetat-Copolymerisat, das aus 40 bis 85, insbesondere 60 bis 75 Mol-% Vinylacetateinheiten besteht, die zu mindestens 90 %, vorzugsweise zu mehr als 95 Mol-% verseift sind. Eine ganz besonders bevorzugte Polyvinylalkoholschicht besteht aus mehr als 95 Mol-% verseiften Polyvinylacetateinheiten. Die daraus hergestllte Folie wird biaxial gereckt.

In einer bevorzugten Ausführungsform ist die Polyvinylalkoholschicht D) insbesondere unlackiert.

Die gegebenenfalls unlackierte Polyvinylalkoholschicht D) ist in einer bevorzugten Ausführungsform mit den folgenden Schichten über eine Verbindungs- oder Klebeschicht B) verbunden. Für eine Klebeschicht wird insbesondere ein handelsüblicher Zweikomponentenpolyurethankleber verwendet.

Bei den Schichten B) kann es sich aber auch um eine Verbindungsschicht aus einem Polyolefin handeln.

Die Olefinschichten C) bestehen im wesentlichen aus einem Olefin. Besonders bevorzugte Polyolefine sind: Polypropylene und Polyethylenhomopolymere,

**EBA** ( = Ethylenbutylacrylat),

**EAA** ( = Ethylenacrylsäure),

**EEA** ( = Ethylenethylacetat) und

Ionomerharze, insbesondere aus einem Ethylen-Methacrylsäure-Copolymeren ( = **EMA**), dessen Kettenmoleküle über Ionenbindung, insbesondere über Zinkionen, vernetzt sind.

Als Schicht A) wird insbesondere ein biaxial gereckter Polyester, oder ein gereckter, tiefziehfähiger Polyester eingesetzt.

Besonders bevorzugt wird als Polyethylen ein LLDPE ( = Linear Low Density Polyethylen). Die einzelnen Schichten weisen vorzugsweise folgende Dicken in $\mu$m auf:

Schicht A) 10 bis 20 $\mu$m,

B1): 0,1 bis 10 $\mu$m, soweit ein Kleber verwendet wird,

C1): 5 bis 500 $\mu$m,

B2): 0,2 bis 10 $\mu$m, soweit ein Kleber verwendet wird bzw. 5 bis 500 $\mu$m, soweit ein Polyolefin als Verbinder verwendet wird,

Schicht D1): 1 bis 50 $\mu$m,

Schichten E): jeweils 5 bis 100 μm,

Schicht B3): 0,2 bis 10 μm, soweit ein Kleber verwendet wird,

Schicht C2): 5 bis 500 μm.

In einer bevorzugten Ausführungsform ist wenigstens eine Schicht des Folienverbundes gereckt, insbesondere wird es bevorzugt, daß die Schicht A) biaxial gereckt ist.

Die Verbundfolie kann in den einzelnen Schichten mit üblichen Additiven und Hilfsmitteln wie z.B. Gleitmitteln, Antiblockmitteln und Antistatika in üblichen Mengen ausgerüstet werden. Bevorzugte Zusätze sind gesättigte oder ungesättigte Fettsäureamide.

| - außen - | | Dicken [μ] | Folie |
|---|---|---|---|
| A.) | PETP | 10-20 | Polyester, biaxial gereckt Polyester, biaxial, tiefziehfähig |
| B.) | Kleber oder Polyolefin | 0,2-10 5-500 | handelsüblicher 2 K PU-Kleber als Verbinderschicht |
| C.) | Polyolefin | 5-500 | PE, CoPE, PP, CoPP, **EBA**, **EAA**, **EEA**, Ionomer, **EMA** |
| B.) | Kleber ohne Polyolefin | 0,2-10 5-500 | als Verbinderschicht |
| D.) | PVAL | 10-20 | Polyvinylalkohol, mit oder ohne Schutzlack |
| B.) | Kleber oder Polyolefin | 0,2-10 5-500 | als Verbinderschicht |
| C.) | Polyolefin | 5-500 | PE, CoPe, PP, CoPP, **EBA**, **EAA**, **EEA**, Ionomer, **EMA** |
| B.) | Kleber oder Polyolefin | 0,2-10 5-500 | als Verbinderschicht |
| D.) | PVAL | 10-20 | Polyvinylalkohol, mit oder ohne Schutzlack |
| B.) | Kleber oder Polyolefin | 0,2-10 5-500 | als Verbinderschicht |
| E.) | Polyolefin | 5-500 | PE, CoPe, PP, CoPP, **EBA**, **EAA**, **EEA**, Ionomer, **EMA** |
| -innen - | | | |

Entgegen der Erwartung, daß die Sperrwirkung gegen Gase und Wasserdampf nur von der Folie mit der geringsten Gasdurchlässigkeit bestimmt wird, hat es sich unerwartet und überraschend herausgestellt, daß die Gasdurchlässigkeit sich durch den besonderen Aufbau so stark verringert hat, daß sich z.B. Vakuum über einen langen Zeitraum (ca. 10 Jahre) in einem Beutel aus der erfindungsgemäßen Verbundfolie hält.

Diese besondere Wirkung wird dadurch erzielt, daß die Polyvinylalkoholschichten, welche bei höheren Feuchtigkeitsgehalt gasdurchlässiger werden, durch wasserundurchlässigere Schichten (z.B. Polyolefine) trocken gehalten werden.

Außerdem wird durch die spezielle Anordnung der Abfolge von wasserdampf- und gasundurchlässigen Schichten ein Konzentrationsgefälle für beide Gassorten erreicht.

Außerdem wird durch die spezielle Anordnung der Abfolge von Sperrschichten für Wasserdampf und Gase ein sich von außen nach innen stetig verringerndes Konzentrationsgefalle für diese Stoffgruppen in der erfindungsgemäßen Verbundfolie erreicht.

Eine so hergestellte Folie kann in allen Bereichen eingesetzt werden, wo bisher metallhaltige Verbunde benötigt wurden, um entweder die Gas- oder die Wasserdampfdurchlässigkeit zu reduzieren, und trotzdem die Knickbruchanfälligkeit zu minimieren.

Außerdem bleibt die optische Kontrolle des Füllgutes in der Packung erhalten.

Die erfindungsgemäße Folie kann auf übliche, dem Fachmann bekannte Methoden, so z.B. auch durch ganz oder teilweise Coextrusion, hergestellt werden.

Eine solche Folie kann z.B. in der Hopfenindustrie zur Verpackung von Hopfenpellets unter Schutzgas (z.B. $CO_2$) zur Erhaltung der Fermente und Enzyme eingesetzt werden. Eine andere Verwendbarkeit ist in technischen Bereichen gegeben, wo es auf die Erhaltung von Hochvakuum über eine lange Zeit ankommt.

Eine so hergestellte Folie ist tiefziehfähig.

Der Gegenstand der Erfindung soll anhand der folgenden Beispiele näher erläutert werden:

3

Beispiel 1

Eine erfindungsgemäße Folie mit dem im folgenden angegebenen Schichtenaufbau wurde hergestellt:

A) eine PETP-Folie, gereckt, 12 $\mu$m
B1) eine Verbindungs- oder Klebeschicht, 2 $\mu$m
C1) eine Polyolefinschicht, 120 $\mu$m
B2) eine Verbindungs- oder Klebeschicht, 2 $\mu$m
D1) eine mit einem Schutzlack versehene Polyvinylalkoholschicht, 15 $\mu$m
B3) eine Verbindungs- oder Klebeschicht, 2 $\mu$m
C2) eine Polyolefinschicht, 120 $\mu$m
B4) eine Verbindungs- oder Klebeschicht, 2 $\mu$m
D2) eine mit einem Schutzlack versehene Polyvinylalkoholschicht, 15 $\mu$m
B5) eine Verbindungs- oder Klebeschicht, 2 $\mu$m
E1) eine Polyolefinschicht, 50 $\mu$m

Beispiel 2

A) eine PETP-Folie, gereckt, 12 $\mu$m
B1) eine Verbindungs- oder Klebeschicht, 2 $\mu$m
C1) eine Polyolefinschicht, 120 $\mu$m
B2) eine Verbindungs- oder Klebeschicht, 2 $\mu$m
D1) eine mit einem Schutzlack versehene Polyvinylalkoholschicht, 15 $\mu$m
B3) eine Verbindungs- oder Klebeschicht, 2 $\mu$m
C2) eine Polyolefinschicht, 120 $\mu$m
B4) eine Verbindungs- oder Klebeschicht, 2 $\mu$m
D2) eine mit einem Schutzlack versehene Polyvinylalkoholschicht, 15 $\mu$m
B5) eine Verbindungs- oder Klebeschicht, 2 $\mu$m
E1) eine Polyolefinschicht, 50 $\mu$m

Die einzelnen Siegelschichten entsprechen denen des Beispiels 1, wobei aber die Schicht B3) aus einem Polyethylen niedriger Dichte für Extrusionskaschierung besteht.

Beispiel 3

Eine erfindungsgemäße Folie mit dem im folgenden angegebenen Schichtenaufbau wurde hergestellt:

A) eine PETP-Folie, gereckt, 12 $\mu$m
B1) eine Verbindungs- oder Klebeschicht, 2 $\mu$m
C1) eine Polyolefinschicht, 120 $\mu$m
B2) eine Verbindungs- oder Klebeschicht, 2 $\mu$m
D1) eine Polyvinylalkoholschicht, 12 $\mu$m
B3) eine Verbindungs- oder Klebeschicht, 2 $\mu$m
C2) eine Polyolefinschicht, 120 $\mu$m
B4) eine Verbindungs- oder Klebeschicht, 2 $\mu$m
D2) eine Polyvinylalkoholschicht, 12 $\mu$m
B5) eine Verbindungs- oder Klebeschicht, 2 $\mu$m
E1) eine Polyolefinschicht, 50 $\mu$m

Die Prüfungen der Wasserdampfdurchlässigkeiten zeigen, daß die Wasserdampfdurchlässigkeit um ca. 50 % niedriger liegt als bei den bisher bekannten Folien.

**Patentansprüche**

1. Metallschichtfreie, sperrschichthaltige Mehrschichtfolie mit verbessertem Sperrverhalten gegen Gas und Wasserdampf, dadurch gekennzeichnet daß sie im wesentlichen folgende Schichten aufweist:

A) eine gegebenenfalls gereckte Polyesterschicht, oder eine tiefziehfähige gereckte Polyesterschicht,
B1) gegebenenfalls eine Verbindungs- oder Klebeschicht,
C1) eine Polyolefinschicht,
B2) gegebenenfalls eine Verbindungs- oder Klebeschicht,
D1) eine gegebenenfalls mit einem Schutzlack versehene Polyvinylalkoholschicht,

B3) gegebenenfalls eine Verbindungs- oder Klebeschicht,

C2) eine Polyolefinschicht,

B4) gegebenenfalls eine Verbindungs- oder Klebeschicht,

D2) gegebenenfalls mit einem Schutzlack versehene Polyvinylalkoholschicht,

B5) gegebenenfalls eine Verbindungs- oder Klebeschicht,

C3) eine Polyolefinschicht.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 322 365 (ALMA SA)<br>* Spalte 1, Zeile 52 - Spalte 2, Zeile 30; Abbildung 1 *<br>--- | 1 | B32B27/08 |
| A | EP-A-0 341 044 (AJINOMOTO CO. INC.)<br>* Spalte 2, Zeile 44 - Zeile 60 *<br>* Spalte 5, Zeile 9 - Spalte 7, Zeile 21; Abbildungen 3,4 *<br>--- | 1 | |
| A | US-A-4 788 105 (MUELLER ET AL)<br>* Spalte 2, Zeile 44 - Spalte 3, Zeile 55; Abbildung 1 *<br>--- | 1 | |
| A | US-A-4 421 823 (THEISEN ET AL)<br>* Spalte 2, Zeile 42 - Spalte 4, Zeile 13; Abbildung 1 *<br>----- | 1 | |
|  |  |  | **RECHERCHIERTE SACHGEBIETE (Int. Cl.5)**<br><br>B32B |

Der vorliegende Recherchenbericht wurde für alle Patentansprüche erstellt

| Recherchenort | Abschlußdatum der Recherche | Prüfer |
|---|---|---|
| DEN HAAG | 17 AUGUST 1992 | MCCONNELL C.H. |